# EUROPEAN PATENT APPLICATION

(11) **EP 4 757 303 A1**
(43) Date of publication of application: **10.06.2026**
(21) Application number: 25219251.3
(22) Date of filing: 28.11.2025
(51) Int. Cl.: H04N 1/00, G03G 15/00

(54) **INFORMATION PROCESSING APPARATUS AND DISPLAY METHOD**

(30) Priority: 06.12.2024 JP 2024213865
(71) Applicant: Sharp Kabushiki Kaisha, Sakai City, Osaka 590-8522 (JP)
(72) Inventor: WASHIDA, Kento, Osaka 590-8522 (JP); TANAKA, Kenji, Osaka 590-8522 (JP)
(74) Representative: Müller Hoffmann & Partner

(57) **Abstract**

An information processing apparatus includes: a display, a state detector that detects a state of the information processing apparatus; an event determiner that determines occurrence of an event requiring displaying of a warning screen; and one or more controllers, wherein the one or more controllers display, on the display, a setting screen enabling displaying corresponding to the event, and suppress the displaying of the warning screen on the display based on the state of the information processing apparatus detected by the state detector when the event determiner determines the occurrence of the event requiring the displaying of the warning screen.

## Description

### Field of the Invention

The disclosure relates to an information processing apparatus and the like. This application is based upon and claims the benefit of priority from the corresponding Japanese Patent Application No. 2024-213865 filed on December 6, 2024, the entire contents of which are incorporated herein by reference.

### Background Art

For example, as shown in Patent Literature 1(PTL 1), an image processing apparatus is disclosed that displays an operation screen for a special user such as a service person when a connected device including a setter for limiting contents of operations in the image processing apparatus in a stepwise manner is connected to the image processing apparatus, and displays an operation screen for a general user when the connected device is not connected to the image processing apparatus.

### Citation List

### Patent Literature

PTL 1: JP 2013-085194 A

### Summary

### Technical Problem

One of the objects of the disclosure is to enable smooth setting work for an apparatus according to, for example, a worker who executes the setting for the apparatus.

### SOLUTION TO PROBLEM

An information processing apparatus according to the disclosure includes a display, a state detector that detects a state of the information processing apparatus, an event determiner that determines occurrence of an event requiring displaying a warning screen, and one or more controllers, wherein the one or more controllers display, on the display, a setting screen enabling displaying corresponding to the event, and suppress the displaying of the warning screen on the display based on the state of the information processing apparatus detected by the state detector when the event determiner determines the occurrence of the event requiring the displaying of the warning screen.

A display method according to the disclosure includes a display step, a state detection step of detecting a state of the information processing apparatus, an event determination step of determining occurrence of an event requiring displaying of a warning screen, and a control step of displaying a setting screen enabling displaying corresponding to the event, and suppressing the displaying of the warning screen based on the state of the information processing apparatus detected in the state detection step when the occurrence of the event requiring the displaying of the warning screen is determined in the event determination step.

### ADVANTAGEOUS EFFECTS OF DISCLOSURE

The disclosure can provide an information processing apparatus and the like enabling smooth setting work for an apparatus according to, for example, a worker who executes the setting work for the apparatus.

### Brief Description of the Drawings

FIG. 1 is a diagram illustrating an overview of an apparatus according to a first embodiment.
FIG. 2 is a diagram illustrating the configuration of hardware of the apparatus according to the first embodiment.
FIG. 3A is a diagram illustrating the configuration of software of an image forming apparatus according to the first embodiment.
FIG. 3B is a diagram illustrating the configuration of software of an external storage apparatus according to the first embodiment.
FIG. 4A is a diagram illustrating an example of a setting executor according to the first embodiment.
FIG. 4B is a diagram illustrating an example of an encrypted specifying file according to the first embodiment.
FIG. 5 is a diagram illustrating a flow of main processing according to the first embodiment.
FIG. 6 is a diagram illustrating a flow of setting screen display processing according to the first embodiment.
FIG. 7A is a diagram illustrating an example of an operation example according to the first embodiment.
FIG. 7B is a diagram illustrating an example of an operation example according to the first embodiment.
FIG. 8 is a diagram illustrating a flow of setting screen display processing according to a second embodiment.
FIG. 9A is a diagram illustrating an operation example according to the second embodiment.
FIG. 9B is a diagram illustrating an operation example according to the second embodiment.
FIG. 9C is a diagram illustrating an operation example according to the second embodiment.
FIG. 9D is a diagram illustrating an operation example according to the second embodiment.
FIG. 10A is a diagram illustrating an operation example according to the second embodiment.
FIG. 10B is a diagram illustrating an operation example according to the second embodiment.
FIG. 10C is a diagram illustrating an operation example according to the second embodiment.
FIG. 10D is a diagram illustrating an operation example according to the second embodiment.
FIG. 11A is a diagram illustrating an operation example according to the second embodiment.
FIG. 11B is a diagram illustrating an operation example according to the second embodiment.
FIG. 11C is a diagram illustrating an operation example according to the second embodiment.
FIG. 11D is a diagram illustrating an operation example according to the second embodiment.
FIG. 12A is a diagram illustrating an operation example according to the second embodiment.
FIG. 12B is a diagram illustrating an operation example according to the second embodiment.
FIG. 13A is a diagram illustrating an operation example according to the second embodiment.
FIG. 13B is a diagram illustrating an operation example according to the second embodiment.
FIG. 13C is a diagram illustrating an operation example according to the second embodiment.
FIG. 14 is a diagram illustrating a flow of main processing according to a third embodiment.
FIG. 15 is a diagram illustrating a flow of main processing according to a fourth embodiment.
FIG. 16 is a diagram illustrating a flow of setting screen display processing according to the fourth embodiment.

### Description of Embodiments

The information processing apparatus requires many settings to be performed for the information processing apparatus, for example, at the time of initial setting (initial installation). In a case of the initial installation of an information processing apparatus requiring complex settings, such as a multifunction peripheral, for example, it is a common practice to dispatch an employee of a dealer who sells multifunction peripherals, a service person, or the like as a service worker for the apparatus to execute processing associated with the initial installation. However, a case where an operator on a user side (user worker) who uses the multifunction peripheral performs the initial installation of the apparatus is becoming popular, instead of dispatching an employee of a dealer, a service person, or the like as the service worker for the apparatus to perform the initial installation, for reasons such as dropping sales price of the multifunction peripheral, a shortage of manpower, and the like.

Here, in the case of performing the initial installation of the multifunction peripheral, the necessity of displaying a warning differs depending on the difference in experience, specifically, between a service worker who is familiar with the operation of the multifunction peripheral and a user worker who operates the multifunction peripheral for the first time. For the user worker who is not familiar with the initial installation operation, for example, the warning needs to be displayed to avoid an error, since the attachment of an image forming unit such as a toner cartridge and a developing unit is difficult. On the other hand, for the service worker, displaying of such a warning is unnecessary, that is, an extra time would be required for a screen operation such as a confirmation operation for the warning displayed, for example. There has been a problem in that the warning cannot be displayed depending on the worker, that is, displaying of minimum required warning for the service worker (dealer), and displaying of the warning for the user worker as much as possible are not achievable.

There is a case where the service worker performs only a part of the initial installation and then the user worker performs the remaining part of the initial installation, and a case where the user worker takes over initial installation which has been performed by the service worker, that is, before the initial installation is completed by the service worker. In such cases, since the worker is determined based on the timing of the initial installation, there is a problem in that the warning is not appropriately displayed according to the worker depending on the timing when the user worker takes over.

An information processing apparatus for solving such problems will be described below in embodiments with reference to the drawings. It is to be noted that the embodiments described below are merely examples for explaining the contents described in the claims, and the technical scope of the disclosure is not limited to the descriptions of these embodiments.

### 1. First Embodiment

Hereinafter, a first embodiment will be described. Note that the first embodiment will be described using the following as an example. In the following embodiment, a case will be described where an information processing apparatus of the disclosure is applied to an image forming apparatus. However, the information processing apparatus may be applied to other apparatuses.

### 1.1 Overall Configuration

### 1.1.1 Overview of System

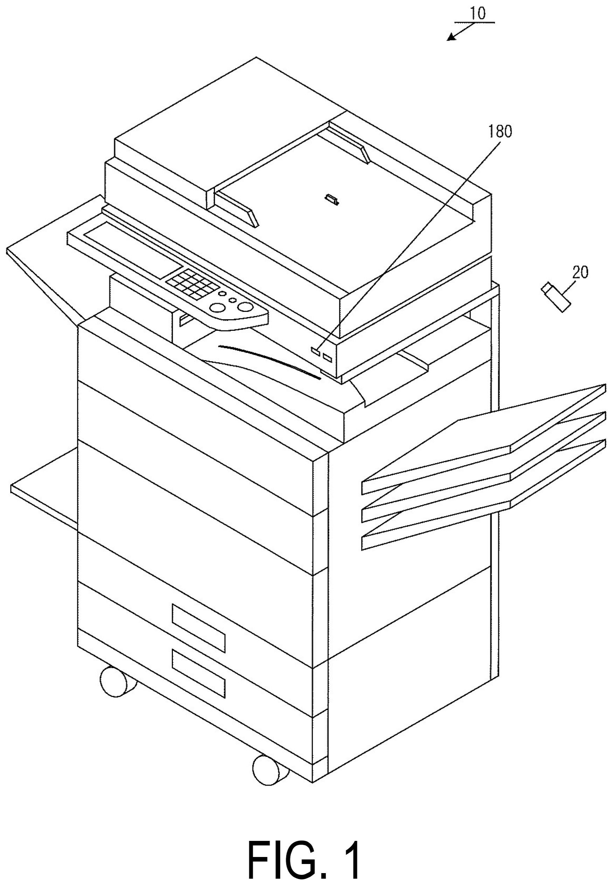

FIG. 1 is a diagram illustrating an overview of an image forming apparatus 10 and an external storage apparatus 20 connectable to the image forming apparatus 10.

The image forming apparatus 10 is an apparatus referred to as, for example, a multifunction printer or a Multifunction Peripheral/Printer (MFP). For example, when executing a job (print job), the image forming apparatus 10 can form an image on a sheet that is a recording medium. The image forming apparatus 10 can execute jobs for a plurality of functions including copy function, fax function, scan function, and print function. The image forming apparatus 10 includes an interface (I/F) unit 180, and can be connected to various types of external apparatuses, for example, through a Universal Serial Bus (USB) port or the like.

The external storage apparatus 20 may be, for example, a portable storage apparatus (removable storage) such as a USB flash drive, a portable hard disk drive (HDD), or a portable solid state drive (SSD). The external storage apparatus 20 employs, for example, a standard that can be used for a storage bus such as USB, External Serial Advanced Technology Attachment (eSATA), IEEE1394, or the like. The external storage apparatus 20 as a USB flash drive is inserted into a USB port to be connected to the image forming apparatus 10, for example.

### 1.1.2 Terms

Hereinafter, the terms in the present specification are used in the context of the meaning of the range that can be understood by those skilled in the art, and for example, the terms are as follows.

The "initial installation" means that, for example, a user worker or a service worker operates setting screens displayed in order to perform various settings for the image forming apparatus 10, so that the user can use the image forming apparatus 10 installed. The image forming apparatus 10 executes one or a plurality of setting modules in order, and the setting modules display respective setting screens one after another. Here, the setting module is a program for displaying the setting screen on a display 140 of the image forming apparatus 10 and executing setting. The image forming apparatus 10 can perform initial installation in, for example, a wizard format as a user interface enabling execution of a series of settings by such a series of programs. Note that, in the present embodiment, the case of performing the initial installation is taken as an example, but, for example, a case of performing resetting such as a setting change after the completion of the initial installation is also applicable.

The "service worker" is a person who performs a setting work such as initial installation of the image forming apparatus 10, and is, for example, an employee of a dealer or a service person dispatched to provide a service related to the image forming apparatus 10. An operation mode under which the image forming apparatus 10 suppresses displaying of a setting screen such as a warning screen (warning display) or an initial approval request screen (initial approval request display) or displays an alternative screen that is an alternative to such screens in the initial installation is referred to as a "dealer mode".

The "user worker" is, for example, a general user who uses the image forming apparatus 10. The user worker can execute setting work such as initial installation of the image forming apparatus 10 instead of the service worker. An operation mode under which the image forming apparatus 10 displays the setting screen such as the warning screen or the initial approval request screen in the initial installation is referred to as a "user mode".

The "setting screen" refers to a display screen for the user worker or the service worker to perform the setting for the image forming apparatus 10. The setting screen may include, for example, a screen such as a setting operation screen, a notification screen, the warning screen, the initial approval request screen, and the alternative screen.

The setting operation screen is a setting screen on which the user worker or the service worker performs an operation to perform the setting for the image forming apparatus 10. The notification screen is a setting screen for issuing a notification or information to the user worker or the service worker. The warning screen is a setting screen for issuing a warning including an operation method for preventing an erroneous operation or setting in the initial installation to the user worker, for example. The initial approval request screen is a setting screen for requesting the user worker for approval of items that need to be approved in the initial installation. The alternative screen is, for example, a setting screen different from the warning screen and the initial approval request screen, and is displayed instead of the warning screen and the initial approval request screen when the initial installation is executed under the dealer mode.

The setting screen may be, for example, one display screen as a combination of one or a plurality of the above-described setting screens, a window display such as a dialog on the display screen, or another display screen as a result of switching the display screen. The setting screen may be stored in, for example, a setting module or the like as a user setting screen (first setting screen) displayed for the user worker and a dealer setting screen (second setting screen) displayed for the service worker.

In the present embodiment, the "dealer" is an organization such as a store or a manufacturer of the image forming apparatus 10, for example. The dealer can set a range (for example, items such as remote firmware update setting, password setting, and image adjustment setting) and a period in which the service worker can execute the initial installation under the dealer mode.

### 1.2 Hardware Configuration

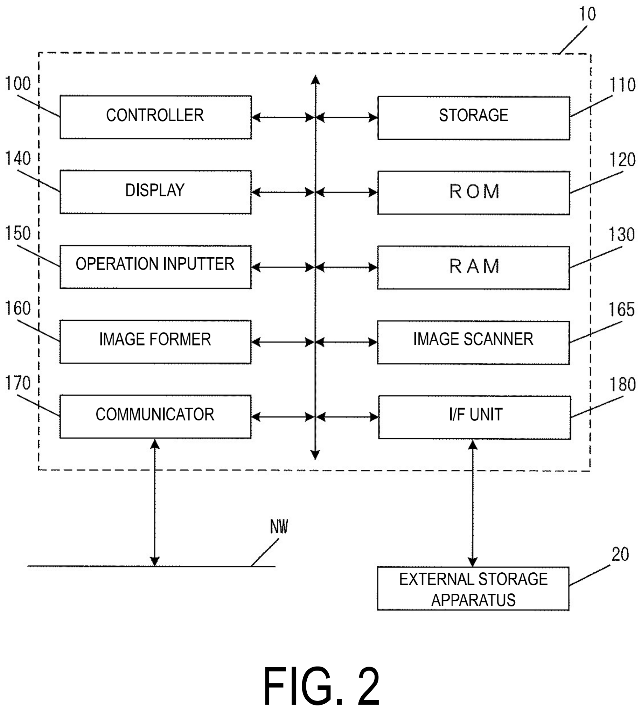

Of the apparatuses included in the disclosure, the image forming apparatus 10 will be described below as a typical apparatus with reference to FIG. 2. FIG. 2 is a diagram illustrating one example of the image forming apparatus 10. In addition, the image forming apparatus 10 has a general function as necessary.

As illustrated in FIG. 2, the image forming apparatus 10 includes a controller 100. The image forming apparatus 10 further includes a storage 110, a read only memory (ROM) 120, and a random access memory (RAM) 130 each serving as a storage apparatus (storage), and also includes a display 140, an operation inputter 150, an image former 160, an image scanner 165, a communicator 170, and an I/F unit 180.

The controller 100 controls the image forming apparatus 10 as a whole. The controller 100 implements various functions by reading and executing various programs stored in the storage apparatuses (storage 110 and ROM 120, for example). The controller 100 may be implemented by one or a plurality of control apparatuses/arithmetic apparatuses (central processing unit (CPU) or system on a chip (SoC)). The controller 100 may include one or a plurality of control circuits.

The storage 110 is a non-volatile storage apparatus capable of storing programs and data. For example, the storage 110 may be configured by one or a plurality of storage apparatuses such as an HDD or SSD. Furthermore, the storage 110 may be configured as an external storage apparatus such as a USB flash drive that can be connected to the image forming apparatus 10. The storage 110 may be, for example, a storage area on a cloud.

The ROM 120 is a non-volatile memory capable of holding the programs and data even if the power is turned off.

The RAM 130 is a main memory mainly used when the controller 100 executes processing. The RAM 130 is a rewritable memory that temporarily holds a program read from the storage 110 or the ROM 120 and data including an execution result.

The display 140 is a display apparatus that can display various types of information and various screens such as an execution screen. The display 140 may be, for example, a display apparatus such as a liquid crystal display (LCD), an organic electro-luminescence (EL) display, or an electrophoresis display. The display 140 includes an interface to which the display apparatus can be connected. For example, the display may include an external display apparatus connected via a high-definition multimedia interface (HDMI; trade name), a digital visual interface (DVI), or a display port.

The operation inputter 150 is an operation apparatus that can receive operation input from the user. For example, the operation inputter 150 may be software keys displayed on a touch panel integrated with the display 140 or hardware keys such as operation buttons. The operation inputter 150 may be an operation apparatus such as a keyboard or a mouse, for example. The operation inputter 150 may also include an interface (USB, for example) to which an operation apparatus can be connected. For example, the image forming apparatus 10 may be connected to different operation apparatuses (keyboard, mouse, and the like) via an interface.

The image former 160 forms an image on, for example, a recording sheet. The image former 160 includes, for example, an image carrier, and forms an image by forming a toner image on the image carrier and transferring the toner image on the image carrier onto the recording sheet. The image former 160 may be configured as an image forming apparatus such as a printer. The image former 160 may electronically form an image as an image file.

The image scanner 165 scans a document (image) and outputs the document as image data. The image scanner 165 is, for example, a scanner, and may be a reading apparatus that utilizes a charge coupled device (CCD), a contact image sensor (CIS), or a complementary metal-oxide-semiconductor (CMOS) image sensor.

The communicator 170 is a communication interface that communicates with other apparatuses. The communicator 170 may be, for example, a network interface capable of providing wired connection or wireless connection. In the present embodiment, communication with other apparatuses is possible via a network NW.

A network (NW) connecting the image forming apparatus 10 may be any communication line or communication system and may utilize a local area network (LAN) that utilizes wired or wireless technology, a virtual local area network (VLAN), the Internet, or a public line network, or a communication system such as mobile communication (mobile communication such as 4G/5G/6G, for example) or a next-generation telephone network, for example.

The I/F unit 180 is an external bus interface connected to various types of external apparatuses. For example, the I/F unit 180 may be a serial bus interface or a multi-bus interface that can be connected to the external storage apparatus 20, a mouse, a keyboard, or the like. In the present embodiment, the I/F unit 180 can be connected to the external storage apparatus 20 via a USB port.

The external storage apparatus 20 is an external storage apparatus such as a general USB flash drive, and hence, detailed explanation thereof will not be provided. For example, the external storage apparatus 20 includes, for example, at least a controller, a storage (storage, ROM, and RAM), and an I/F unit.

### 1.3 Software Configuration

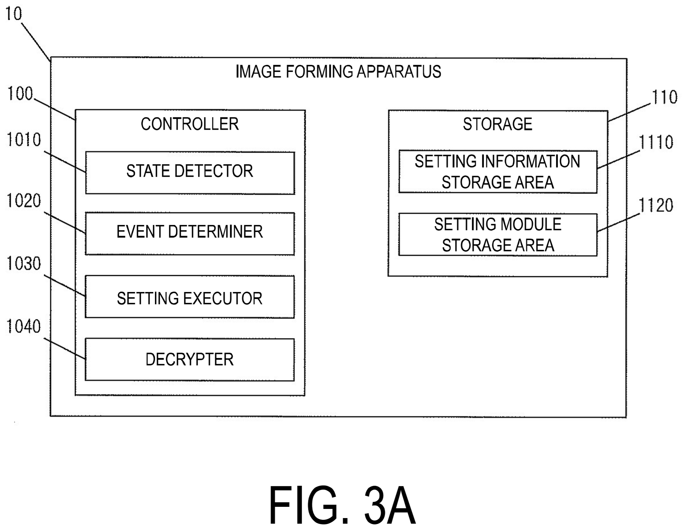

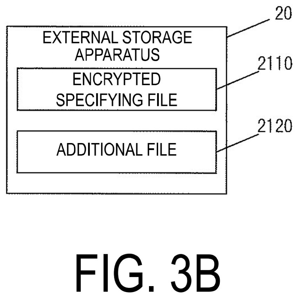

A main software configuration of each of the apparatuses included in the disclosure will be described with reference to FIG. 3A. FIG. 3A is a diagram illustrating an example of the software configuration of the image forming apparatus 10. Note that, in the software configuration illustrated in FIGS. 3A and 3B, configurations necessary for the present embodiment are mainly described, and other configurations are omitted.

### 1.3.1 Image Forming Apparatus

First, the main software configuration of the image forming apparatus 10 will be described. For example, the controller 100 can implement a state detector 1010, an event determiner 1020, a setting executor 1030, and a decrypter 1040, by reading and executing a program stored in a storage 110 or a ROM 120.

The state detector 1010 detects the state of the apparatus, for example, the state of the apparatus related to the image forming apparatus 10 or a change in the state of the apparatus. Here, the state of the apparatus refers to a state of connection between the image forming apparatus 10 and an external apparatus, a state of the apparatus related to hardware, a state of the apparatus related to software, and the like.

The state detector 1010 detects, for example, the states of the apparatus and a change in the state of the apparatus as described below. The state detector 1010 may detect, as the state of connection with the external apparatus, for example, a state of the apparatus related to whether the external storage apparatus 20 is connected to the image forming apparatus 10 via the I/F unit 180. The state detector 1010 may detect as the state of the apparatus related to hardware, for example, a state of opening and closing of a door, a state of set sheet, a state of a switch, and the like. For example, when detecting the open/closed state of the door, the state detector 1010 detects the state of the apparatus such as that related to whether the door is open or closed. The state detector 1010 may detect, as the state of the apparatus related to software, for example, a state in which a scan job is being executed, a state in which a specific setting module is being executed, a state in which image quality adjustment is being executed, and the like.

When the state detector 1010 detects the state of the image forming apparatus 10 or a change in the state of the image forming apparatus 10, the state detector 1010 may notify the event determiner 1020 of the state of the image forming apparatus 10 as an event, for example.

The event determiner 1020 determines the occurrence of an event based on, for example, the event received from the state detector 1010. Here, the occurrence of an event corresponds to a case where there is a received event and specific processing corresponding to the event. For example, when an event occurs during execution of a setting module, the event determiner 1020 compares the received event with the condition of occurrence of the event stored in the setting module. Then, for example, when the condition of the occurrence of the event and the received event match, the event determiner 1020 determines that the event has occurred.

The event determined by the event determiner 1020 may be one event or may be a plurality of events. The event determiner 1020 can determine the occurrence of an event by comparing a plurality of events, such as events based on the open/closed state of a door provided to the image forming apparatus 10, the state of set sheet, and the state of a switch, with the condition of the occurrence of the event, for example. The specific processing may not be limited to the processing stored in the setting module. The event determiner 1020 can determine the occurrence of an event corresponding to processing such as storing a flag for activating the dealer mode or the user mode, for example.

The setting executor 1030 executes, for example, the setting module stored in a setting module storage area 1120. The setting executor 1030 continuously executes the setting modules in a predetermined order, for example. Accordingly, as the setting executor 1030 executes the setting modules one after another, the setting executor 1030 can sequentially display the setting screens on the display 140 for performing the initial installation of the image forming apparatus 10.

Here, the setting executor 1030 may execute the setting modules with the execution order being different between the user mode and the dealer mode. When the event determiner 1020 determines that an event has occurred, for example, if processing corresponding to the occurrence of the event is stored in the setting module being executed, the setting executor 1030 can execute the processing.

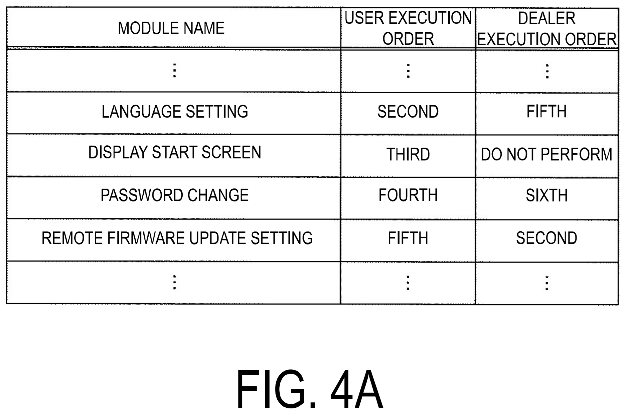

FIG. 4A is a diagram illustrating an example of a setting module executed by the setting executor 1030. The setting executor 1030 executes the module name (for example, the language setting) in the user execution order (for example, "second") under the user mode, and executes the module name in the dealer execution order (for example, "fifth") under the dealer mode. As the user execution order and the dealer execution order, for example, "n-th (n = 1, 2, 3, 4, 5, ..., n)" and "not executed" may be stored. Here, "not executed" indicates that the setting executor 1030 does not execute the module under the user mode or the dealer mode.

In the present embodiment, the setting executor 1030 stores the table illustrated in FIG. 4A in the storage 110, and the setting executor 1030 reads and executes the table. Here, the setting executor 1030 may sequentially execute the setting modules without using the table, and for example, a program may have the execution order of the setting modules under the dealer mode and the user mode incorporated in advance. In this manner, the setting executor 1030 changes the execution order of the setting modules based on the operation mode, and further switches and displays the setting screen in accordance with the occurrence of the event. As a result, the setting executor 1030 executes the setting modules in the order differing between the user mode and the dealer mode, and displays different setting screens in order.

For example, the setting executor 1030 can display a first setting screen group including a plurality of first setting screens on the display 140 under the user mode, and can display a second setting screen group including a plurality of second setting screens on the display 140 under the dealer mode.

The decrypter 1040 executes, for example, processing of decrypting an encrypted specifying file 2110 acquired from the external storage apparatus 20. The decrypter 1040 decrypts the encrypted specifying file 2110 using an encryption key to acquire a specifying file, for example. Here, the specifying file is, for example, a file for specifying and identifying a service worker. Here, the encryption key may be stored in the storage 110 of the image forming apparatus 10, or may be incorporated and stored in the decrypter 1040 as a program, for example. The decrypter 1040 may perform the decryption of the encrypted specifying file 2110 encrypted by an encryption method such as Advanced Encryption Standard (AES), Rivest Cipher/Ron's Code 4 (RC4), and Data Encryption Standard (DES), using the same encryption method, for example.

In addition, the storage 110 secures a setting-information storage area 1110 for storing setting information. The setting information is setting information required for operating the image forming apparatus 10. Here, the setting information required for operating the image forming apparatus 10 may be, for example, setting information required for operating the network, setting information related to security such as an administrator password and a user password, or setting information related to display such as a language displayed on the display 140. For example, the setting information corresponding to the executed setting module is stored in the setting-information storage area 1110 by the user worker or the service worker operating the setting screen to perform the setting.

Further, the storage 110 secures the setting module storage area 1120. Here, the setting module storage area 1120 stores a setting module to be executed by the setting executor 1030. The setting module can display, for example, the first setting screen group and the second setting screen group in a wizard format. For example, a program for executing the following processing is stored.
(1) When the setting executor 1030 executes a setting module, a setting screen corresponding to the setting module is displayed on the display 140. The user can operate the setting screen to execute the setting. When the user executes an operation of switching the setting screen in forward order, such as selecting a next button, the setting executor 1030 terminates the setting module and executes the setting module corresponding to the next execution order, for example. On the other hand, when the user executes an operation of switching the setting screen in reverse order, such as selecting a return button, the setting executor 1030 terminates the setting module and executes the setting module corresponding to the immediately preceding execution order, for example.
(2) When the event determiner 1020 determines that an event has occurred, the setting executor 1030 displays the first setting screen or the second setting screen corresponding to the occurrence of the event on the display 140. The setting executor 1030 can display, for example, the first setting screen including the warning screen and the initial approval request screen, and the second setting screen including the alternative screen, in response to the occurrence of an event.
(3) When the setting executor 1030 terminates a setting module executed under a specific operation mode, for example, the dealer mode, the setting executor 1030 can store a work state (for example, information indicating which setting module has been executed, setting information set in the initial installation, and information on a flag executed for the executed setting module).

The setting module may be stored in the setting module storage area 1120 as a sub-program (subroutine) with the setting executor 1030 defined as a main program (main routine).

### 1.3.2 External Storage Apparatus

Next, the main software configuration of the external storage apparatus 20 will be described with reference to FIG. 3B. FIG. 3B is a diagram illustrating an example of the software configuration of the external storage apparatus 20.

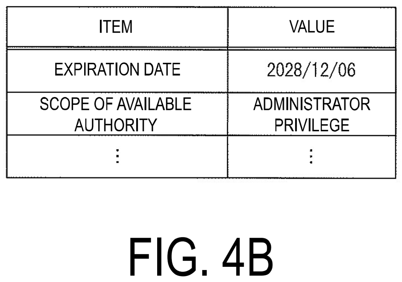

The storage of the external storage apparatus 20 secures an area for storing the encrypted specifying file 2110. Here, the encrypted specifying file 2110 is, for example, a file obtained by encrypting a specifying file. Here, one example of information stored in the encrypted specifying file 2110 will be described with reference to FIG. 4B. An item (for example, "expiration date") necessary for the determination and a value (for example, "2028/12/06") corresponding to the item are stored. In the present embodiment, the encrypted specifying file 2110 is stored in the external storage apparatus 20 as a file for specifying and identifying the service worker, and may include information such as whether the initial installation is executed under the user mode or the dealer mode, for example, information such as operation mode information for the initial installation.

Further, the storage of the external storage apparatus 20 secures an area for storing an additional file 2120. Here, the additional file 2120 is a file for additionally storing, when the initial installation is interrupted, information until the interruption, in the external storage apparatus 20, for example. The additional file 2120 stores a work state as the information until the interruption.

### 1.4 Flow of Processing

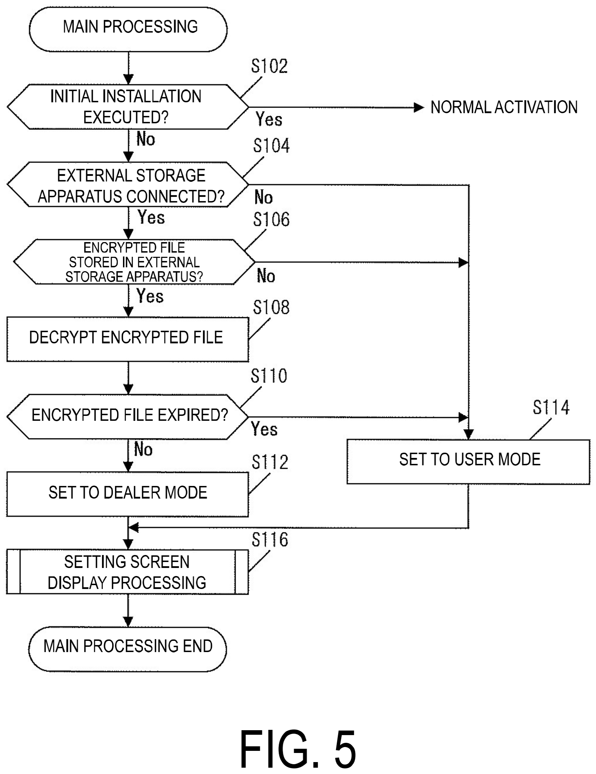

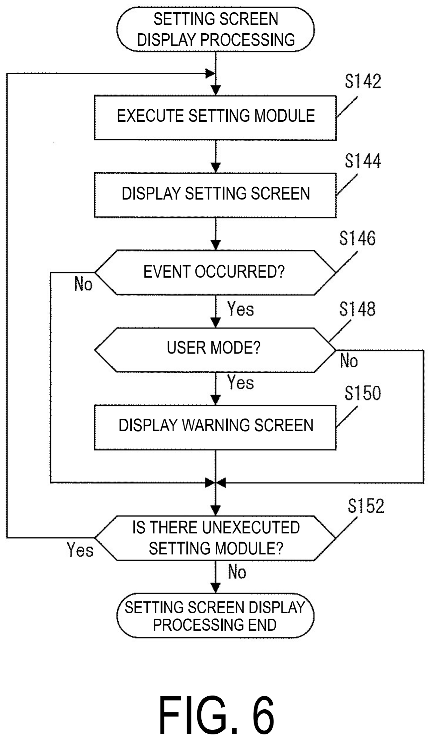

Below, the flow of processing in the present embodiment will be described with reference to FIGS. 5 and 6. FIG. 5 is a diagram illustrating a flow of main processing, and FIG. 6 is a diagram illustrating a flow of the setting screen display processing. Note that the configuration described with reference to FIG. 2, FIG. 3A, or FIG. 3B may execute the processing of each step.

### 1.4.1 Flow of Main Processing

Then, the controller 100 determines whether the initial installation has been executed (S102). As a method of determining whether the initial installation has been executed, for example, a flag enabling determination on whether the execution of the initial installation has been completed may be stored in the setting-information storage area 1110, and the controller 100 may perform the determination using the flag. When the initial installation has been executed, the controller 100 performs normal activation including, for example, displaying a main screen and the like (S102; Yes).

On the other hand, when the initial installation has not been executed, the controller 100 determines whether the external storage apparatus 20 is connected (S102; No -> S104). When the external storage apparatus 20 is connected, the controller 100 reads the external storage apparatus 20 and determines whether the encrypted specifying file 2110 is stored in the external storage apparatus 20 (S104; Yes -> S106). When the encrypted specifying file 2110 is stored in the external storage apparatus 20, the controller 100 decrypts the encrypted specifying file 2110 to acquire the specifying file (S106; Yes -> S108).

Next, the controller 100 determines whether the expiration date stored in the specifying file acquired by decrypting the encrypted specifying file 2110 has passed (S110). Here, the controller 100 may determine that the expiration date stored in the specifying file has not passed, for example, when the specifying file can be correctly read and the expiration date has not passed. When the expiration date has not passed, the controller 100 temporarily sets a flag indicating that the initial installation is to be executed under the dealer mode, in the storage 110 or the RAM 130, for example (S110; No -> S112).

On the other hand, when the external storage apparatus 20 is not connected (S104; No), when the encrypted specifying file 2110 is not stored (S106; No), and when the expiration date stored in the specifying file has passed (S110; Yes), the controller 100 sets the initial installation to be executed under the user mode (S114).

Next, the controller 100 executes the setting screen display processing (S116). Here, the setting screen display processing is processing of determining whether to display the first setting screen group with which warning display (warning screen) is not suppressed or the second setting screen group with which warning display (warning screen) is suppressed, for example, depending on whether the mode is the user mode or the dealer mode, in a case where the setting module is executed in the initial installation. The setting screen display processing will be described below.

### 1.4.2 Flow of Setting Screen Display Processing

First, the controller 100 executes the first setting module from the setting module storage area 1120 (S142). Here, the controller 100 determines whether the mode is the user mode or the dealer mode, and executes the setting module based on the order set in FIG. 4A described above. The controller 100 causes the setting screen to be displayed on the display 140 based on the setting module executed (S144).

Next, the controller 100 determines whether an event involving displaying a warning screen has occurred (S146). When the controller 100 determines that the event has occurred, the controller 100 determines whether the initial installation is executed under the user mode (S146; Yes -> S148). When the initial installation is executed under the user mode, the controller 100 displays, for example, a warning screen (first setting screen) corresponding to the event (S148; Yes -> S150).

On the other hand, when the occurrence of the event is not determined (S146; No), and when the initial installation is executed under the dealer mode and not under the user mode (S148; No), the controller 100 determines whether there is an unexecuted setting module (S152). When there is an unexecuted setting module, for example, when the first setting module has been executed and there is the second setting module, the controller 100 executes the second setting module in the next order (S152; Yes -> S142). When there is no unexecuted setting module that can be executed next, the controller 100 ends the processing (S152; No). That is, the controller 100 displays the warning screen under the user mode, and suppresses the displaying so that the warning screen is not displayed under the dealer mode, for example.

In the present embodiment, the controller 100 determines the occurrence of the event involving displaying the warning screen, and displays the warning screen on the display 140 as the first setting screen under the user mode, but the warning screen may be displayed for other events. For example, the controller 100 may determine occurrence of an event involving displaying the initial approval request screen, and display the initial approval request screen on the display 140 as the first setting screen under the user mode.

The controller 100 may store the setting information set by the user worker or the service worker on the setting screen in the setting-information storage area 1110 when the setting screen display processing ends, or may store the setting information in the setting-information storage area 1110 when each setting module is terminated. In addition, when the external storage apparatus 20 is connected, the controller 100 may store the setting information in the additional file 2120 of the external storage apparatus 20 when the individual setting module is terminated, or may store the setting information in the setting-information storage area 1110 when the setting screen display processing ends.

### 1.5 Operation Examples

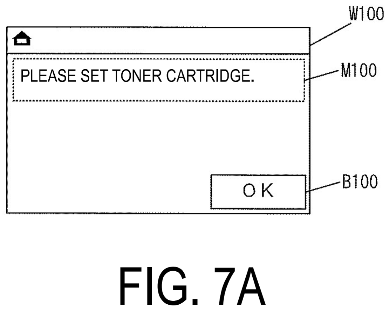

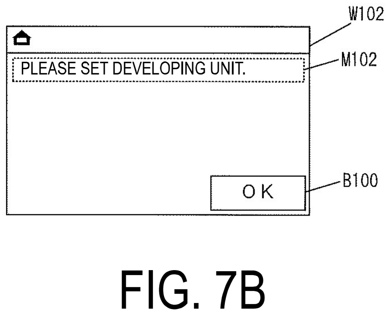

FIGS. 7A and 7B are diagrams each illustrating an example of an operation of the image forming apparatus 10 according to the present embodiment. FIGS. 7A and 7B are diagrams illustrating an operation related to the warning screen (first setting screen) displayed on the display 140 of the image forming apparatus 10 when the initial installation of the image forming apparatus 10 is executed under the user mode.

A display screen W100 in FIG. 7A displays a message M100 "SET TONER CARTRIDGE", and an OK button B100. Here, when the user worker sets the toner cartridge in response to the message and then selects the OK button B100, the controller 100 displays a display screen W102 in FIG. 7B on the display 140.

The display screen W102 in FIG. 7B displays a message M102 "SET DEVELOPING UNIT" and the OK button B100. Here, when the user worker sets the developing unit in response to the message and then selects the OK button B100, the controller 100 displays a setting screen of a setting module to be executed next, for example, language setting, on the display 140.

On the other hand, when the external storage apparatus 20 storing the encrypted specifying file 2110 is connected to the image forming apparatus 10 and the initial installation is executed under the dealer mode, the controller 100 suppresses the display of FIGS. 7A and 7B. For example, when a service worker sets the toner cartridge or the developing unit, the controller 100 displays the second setting screen for remote firmware update setting or the like on the display 140.

In this way, in a case where the user worker is performing initial setting (initial installation), for example, all warning screens such as display indicating that toner is not attached, the developing unit is not attached (not attached and is in a packed state), and a sheet is to be set for patch printing are to be displayed. On the other hand, when the dealer (service worker) performs initial setting (initial installation), such a warning screen is not displayed, and a minimum required notification screen (for example, a setting screen indicating that toner, a developing unit, and sheet are to be set) for initial adjustment is displayed.

Therefore, the warning and the procedure are displayed to the user worker one by one in detail so as to prevent an error, and the dealer (service worker) side can perform the installation processing with a screen operation of the shortest time with no unnecessary warning, approval request screen, or the like displayed. Further, since the warning screen for setting of the parts at the time of initial installation can be hidden so that the OK button does not have to be pressed each time, the work time of the initial installation can be shortened.

In addition, in the present embodiment, a case where the initial installation is performed is taken as an example, but the present embodiment is also applicable to a case where resetting such as a setting change is performed after the initial installation is completed. When the dealer (service worker) changes the setting information, the controller 100 can suppress the warning screen for requesting the original administrator password for making the change, so that the change processing for the setting information can be executed without inputting the original administrator password, for example.

Further, the determination on whether the initial installation is performed is not changed, and control for switching the warning screen for the initial installation (initial setting screen) can be performed based on determining whether the work is the dealer (service worker) work or the user work in accordance with the apparatus state of the image forming apparatus 10 at the start of the initial installation.

### 1.6 Effects, etc.

According to the present embodiment, in a case where the initial installation is performed by the service worker, even if the occurrence of an event requiring a warning screen or the like is determined, it is possible to suppress, that is, not display the warning screen or the like. This makes it possible to minimize the display to the service worker. An information processing apparatus can be provided which enables a service worker who is familiar with initial installation work and a user worker who touches the information processing apparatus for the first time to smoothly perform the initial installation.

Further, it is not necessary to distinguish the initial installation between the work of the service worker and the work of the user worker depending on the model, and the dealer does not need to perform complicated management such as model management.

### 2. Second Embodiment

Hereinafter, a second embodiment will be described. The second embodiment is an embodiment in which, when it is determined that an event involving displaying a warning screen or the like has occurred, an alternative screen (second setting screen) can be displayed instead of the warning screen (first setting screen) in the case of the dealer mode.

In the second embodiment, the same hardware and software configurations as those of the first embodiment will not be described, and differences from the first embodiment will be mainly described.

### 2.1 Flow of Processing

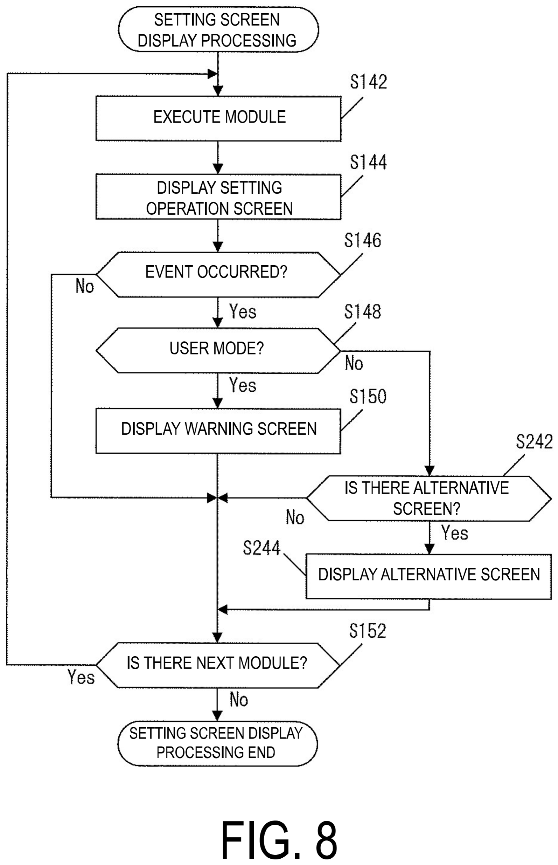

Hereinafter, a flow of processing in the present embodiment will be described. FIG. 8 is a diagram illustrating a flow of setting screen display processing. FIG. 8 is a replacement for FIG. 6 in the first embodiment, and S242 to S244 are executed after S148.

First, when the initial installation is executed under the dealer mode instead of the user mode, the controller 100 determines whether the alternative screen is stored in the setting module being executed (S148; No -> S242). When the alternative screen is stored in the setting module, the controller 100 displays the alternative screen as the second setting screen on the display 140 (S242; Yes -> S244), and when the alternative screen is not stored, the controller 100 determines whether there is a next module (S242; No -> S152).

Here, the controller 100 may display, as the second setting screen, an alternative screen in which a part of the screen is replaced, or may display, as the second setting screen, an alternative screen in which the entire display screen is replaced, for example. Further, for example, the contents of the warning screen and the initial approval request screen and the contents of the corresponding alternative screen may not be related to each other, and the controller 100 may collectively replace the plurality of first setting screens with one second setting screen.

### 2.2 Example of Operation

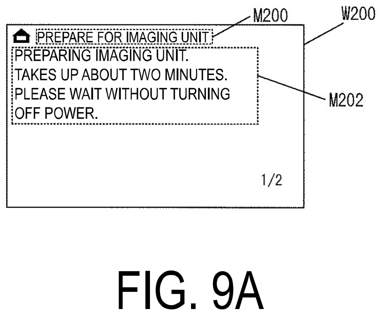

FIGS. 9A to 9D, FIGS. 10A to 10D, FIGS. 11A to 11D, FIG. 12A, FIG. 12B, and FIGS. 13A to 13C are diagrams each illustrating an example of an operation of the image forming apparatus 10 according to the present embodiment. In the present embodiment, as an example, the initial installation is executed in a wizard format, the first setting screen group is displayed under the user mode, and the second setting screen group is displayed under the dealer mode.

### 2.2.1 Initial Installation under User Mode

FIGS. 9A to 9D, FIGS. 10A to 10D, FIGS. 11A to 11D, FIG. 12A, and FIG. 12B are diagrams illustrating an example of an operation of displaying the first setting screen group on the display 140 of the image forming apparatus 10 when the initial installation is executed under the user mode. Note that FIGS. 9A to 9D, FIGS. 10A to 10D, FIGS. 11A to 11D, FIG. 12A, and FIG. 12B include a part of the setting screen common to the dealer mode.

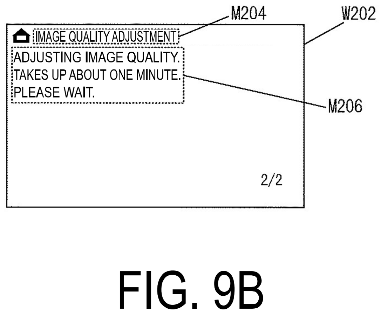

FIG. 9A is a diagram illustrating an example of a setting screen displayed on the display 140 when the OK button B100 is selected on the display screen W102 in FIG. 7B, for example. The display screen W200 of FIG. 9A displays a message M200 "PREPARING IMAGING UNIT" and a message M202 "PREPARING IMAGING UNIT. TAKES UP ABOUT TWO MINUTES. PLEASE WAIT WITHOUT TURNING OFF POWER". When the preparation processing for the imaging unit is completed, the controller 100 displays the display screen W202 in FIG. 9B on the display 140.

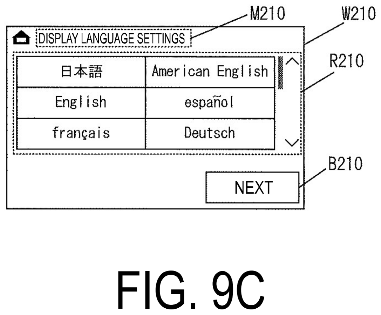

The display screen W202 of FIG. 9B displays a message M204 "IMAGE QUALITY ADJUSTMENT" and a message M206 "ADJUSTING IMAGE QUALITY. TAKES UP ABOUT ONE MINUTE. PLEASE WAIT". When image quality adjustment processing is completed, the controller 100 displays a display screen W210 in FIG. 9C on the display 140.

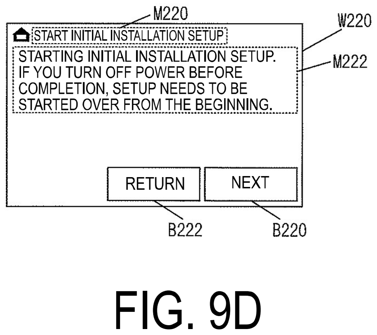

The display screen W210 in FIG. 9C displays a message M210 "DISPLAY LANGUAGE SETTING", a language selection area R210 in which a language can be selected, and a next button B210. Here, when the user worker selects the next button B210, the controller 100 displays a display screen W220 in FIG. 9D on the display 140.

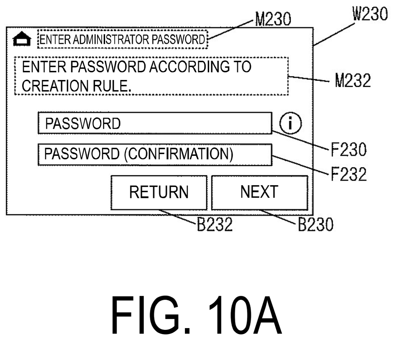

The display screen W220 in FIG. 9D displays a message M220 "START INITIAL INSTALLATION SETUP" and a message M222 "STARTING INSTALLATION SETUP. IF YOU TURN OFF POWER BEFORE COMPLETION, SETUP NEEDS TO BE STARTED OVER FROM THE BEGINNING", a next button B220, and a return button B222. Here, when the user worker selects the next button B220, the controller 100 displays a display screen W230 in FIG. 10A on the display 140. On the other hand, when the user worker selects the return button B222, the controller 100 displays a display screen W210 in FIG. 9C on the display 140.

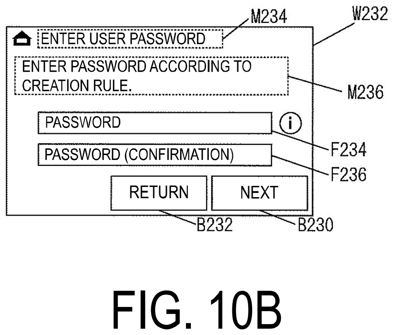

The display screen W230 in FIG. 10A displays a message M230 "ENTER ADMINISTRATOR PASSWORD", a message M232 "ENTER PASSWORD ACCORDING TO CREATION RULE", an administrator password entry form F230, an administrator password confirmation form F232, a next button B230, and a return button B232. Here, when the user worker inputs the administrator password to the administrator password entry form F230 and the administrator password confirmation form F232 and selects the next button B230, the controller 100 displays a display screen W232 in FIG. 10B on the display 140. On the other hand, when the user worker selects the return button B232, the controller 100 displays the display screen W220 in FIG. 9D on the display 140.

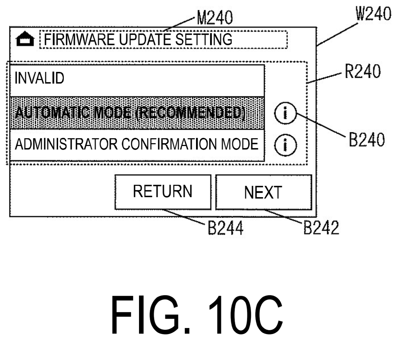

The display screen W232 in FIG. 10B displays a message M234 "ENTER USER PASSWORD", a message M236 "ENTER PASSWORD ACCORDING TO CREATION RULE", a user password entry form F234, a user password confirmation form F236, the next button B230, and the return button B232. Here, when the user worker inputs the user password to the user password entry form F234 and the user password confirmation form F236 and selects the next button B230, the controller 100 displays a display screen W240 in FIG. 10C on the display 140. On the other hand, when the user worker selects the return button B232, the controller 100 displays the display screen W230 in FIG. 10A on the display 140.

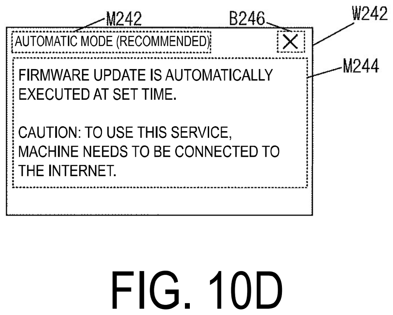

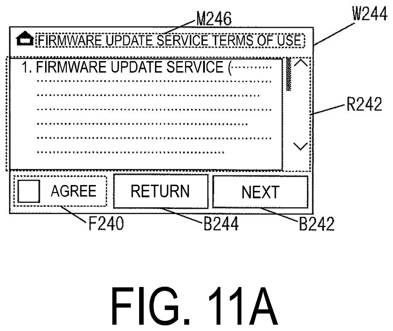

The display screen W240 in FIG. 10C displays a message M240 "FIRMWARE UPDATE SETTING", an area R240 for setting the firmware update setting, a next button B242, and a return button B244. Further, a help icon B240 is displayed in the area R240. Here, when the user worker selects the help icon B240, the controller 100 displays a display screen W242 in FIG. 10D on the display 140. On the other hand, when the user worker selects the next button B242, the controller 100 displays a display screen W244 in FIG. 11A on the display 140. On the other hand, when the user worker selects the return button B244, the controller 100 displays the display screen W232 in FIG. 10B on the display 140.

The icon herein means pictures, pictographs, symbols, and characters displayed on the display screen to represent various types of data and processing functions, for example. When the user worker selects an icon, the controller 100 can execute the processing set for the icon.

The display screen W242 in FIG. 10D displays a message M242 "AUTOMATIC MODE (RECOMMENDED)" and a message M244 "FIRMWARE UPDATE IS AUTOMATICALLY EXECUTED AT SET TIME. CAUTION: TO USE THIS SERVICE, MACHINE NEEDS TO BE CONNECTED TO THE INTERNET" and a close button B246. Here, when the user worker selects the close button B246, the controller 100 displays the display screen W240 in FIG. 10C on the display 140.

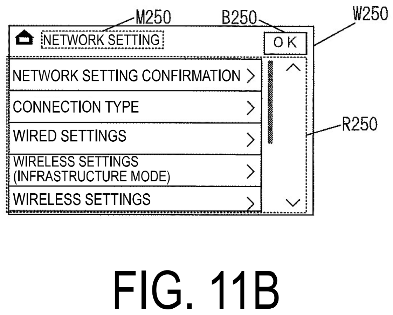

The display screen W244 in FIG. 11A displays a message M246 "FIRMWARE UPDATE SERVICE TERMS OF USE", a firmware update service terms of use display area R242, an agreement form F240, the next button B242, and the return button B244. Here, when the user worker selects the next button B242 after selecting the agreement form F240, the controller 100 displays a display screen W250 in FIG. 11B on the display 140. On the other hand, when the user worker selects the return button B244, the controller 100 displays the display screen W240 in FIG. 10C on the display 140.

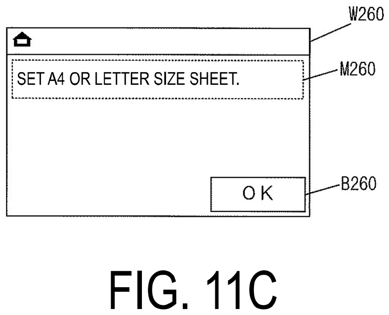

The display screen W250 in FIG. 11B displays a message M250 "NETWORK SETTING", an area R250 for setting the network setting, and an OK button B250. Here, when the user worker selects the OK button B250, the controller 100 displays a display screen W260 in FIG. 11C on the display 140.

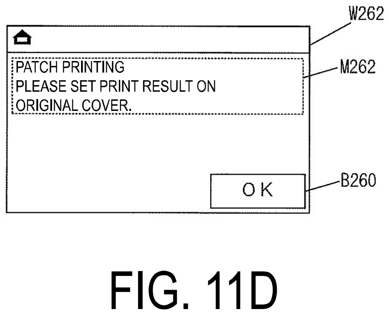

The display screen W260 in FIG. 11C displays a message M260 "SET A4 OR LETTER SIZE SHEET" and an OK button B260. Here, when the user worker sets the A4 or letter size sheet in a sheet feeding cassette, a bypass tray, or the like and selects the OK button B260, the controller 100 displays a display screen W262 in FIG. 11D on the display 140.

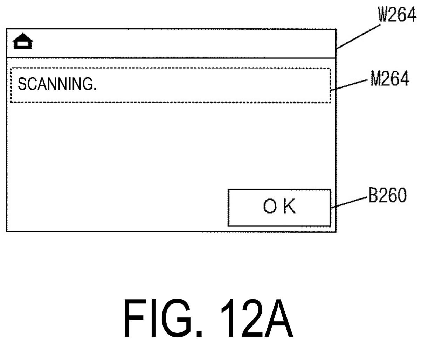

The display screen W262 in FIG. 11D displays a message M262 "PATCH PRINTING, PLEASE SET PRINT RESULT ON ORIGINAL COVER" and the OK button B260. Here, when the user worker sets the printed patch on the original cover and selects the OK button B260, the controller 100 displays a display screen W264 in FIG. 12A on the display 140.

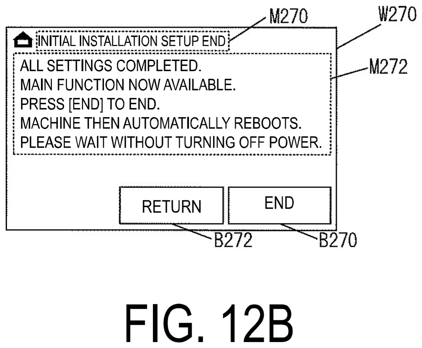

The display screen W264 in FIG. 12A displays a message M264 "SCANNING" and the OK button B260. Here, when the user worker selects the OK button B260 after the completion of the scanning, the controller 100 displays a display screen W270 in FIG. 12B on the display 140 if the adjustment is completed, and displays the display screen W260 in FIG. 11C on the display 140 again when the adjustment is insufficient.

The display screen W270 in FIG. 12B displays a message M270 "INITIAL INSTALLATION SETUP COMPLETED" and a message M272 "ALL SETTINGS COMPLETED. MAIN FUNCTION NOW AVAILABLE. PRESS [END] TO END. MACHINE THEN AUTOMATICALLY REBOOTS. PLEASE WAIT WITHOUT TURNING OFF POWER", an end button B270, and a return button B272. Here, when the user worker selects the end button B270, the controller 100 executes the reboot, and then displays, for example, a home screen, which is a function selection screen for selecting a function of the image forming apparatus 10, on the display 140 as the initial screen. On the other hand, when the user worker selects the return button B272, the controller 100 displays the display screen W250 in FIG. 11B on the display 140, for example.

### 2.2.2 Initial Installation under Dealer Mode

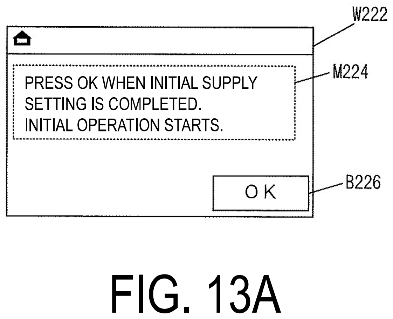

FIGS. 13A to 13C are diagrams each illustrating an example of an operation of displaying, as the second setting screen group, the alternative screen (second setting screens) on the display 140 of the image forming apparatus 10 in a case where the initial installation is executed under the dealer mode.

FIG. 13A is a diagram illustrating an example of the alternative screen (second setting screen) displayed on the display 140 instead of the warning screen (first setting screen) such as the display screen W100 in FIG. 7A and the display screen W102 in FIG. 7B, for example, when the initial installation is executed under the dealer mode. A display screen W222 in FIG. 13A displays a message M224 "PRESS OK WHEN INITIAL SUPPLY SETTING IS COMPLETED. INITIAL OPERATION STARTS" and an OK button B226. Here, when the service worker sets the toner cartridge and the developing unit and selects the OK button B226, the controller 100 executes the processing for the preparation of the imaging unit and the image quality adjustment in the background, and displays the display screen W240 in FIG. 10C on the display 140 after the completion of the processing.

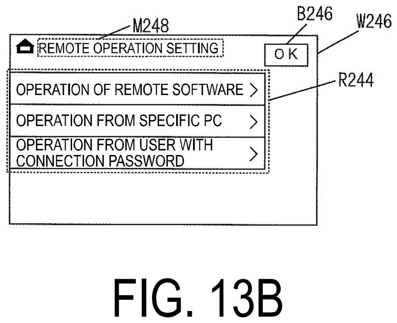

In the case of the dealer mode, the help icon B240 cannot be selected on the display screen W240 in FIG. 10C. Here, when the service worker selects the next button B242, the controller 100 displays a display screen W246 in FIG. 13B on the display 140. On the other hand, when the service worker selects the return button B244, the controller 100 displays the display screen W222 in FIG. 13A on the display 140.

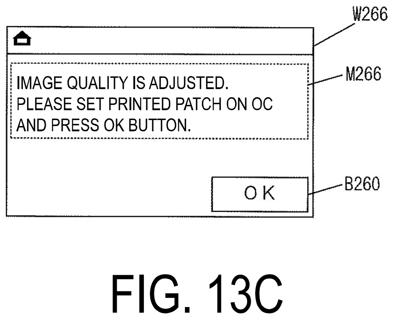

FIG. 13B is a diagram illustrating an example of an alternative screen (second setting screen) displayed on the display 140 instead of the display screen W244, which is the initial approval request screen (first setting screen) in FIG. 11A, for example. The display screen W246 in FIG. 13B displays a message M248 "REMOTE OPERATION SETTING", an area R244 for setting the remote operation setting, and an OK button B246. Here, when the service worker selects the OK button B246, the controller 100 displays a display screen W266 in FIG. 13C on the display 140. By displaying the alternative screen in such a manner, it is possible to switch the setting items for the image forming apparatus 10.

FIG. 13C is a diagram illustrating an example of an alternative screen (second setting screen) displayed on the display 140 instead of the warning screen (first setting screen), such as the display screen W260 in FIG. 11C, the display screen W262 in FIG. 11D, and the display screen W264 in FIG. 12A. The display screen W266 in FIG. 13C displays a message M266 "IMAGE QUALITY IS ADJUSTED. PLEASE SET PRINTED PATCH ON OC AND PRESS OK BUTTON" and the OK button B260. Here, when the service worker sets the printed patch on the original cover (OC) and selects the OK button B260, the controller 100 displays the display screen W210 of FIG. 9C on the display 140 if the adjustment is completed. On the other hand, if the adjustment is insufficient, the display screen W266 in FIG. 13C is displayed again on the display 140.

In this way, in the case of the user mode, when the warning screen is individually displayed, it is necessary to select the OK button or the like to erase the display each time. Still, it is possible to prevent an error in the setting in the initial installation. On the other hand, in the case of the dealer mode, it is possible to reduce the work time by suppressing the individual display of warning screens, displaying alternative screens that are collectively displayed, and the like.

Under the user mode, the controller 100 can display, for example, help for terms that are difficult for the user worker to understand, such as "OC" and "automatic mode", or can display the first setting screen in which "OC" is replaced with a term that can be understood by the user worker, such as "original cover". On the other hand, under the dealer mode, the controller 100 can display, as the alternative screen, the second setting screen that displays terms that are difficult to understand for the user worker as they are without displaying help or the like, for example. In this way, it is possible to perform displaying according to the difference in knowledge and experience of the worker between the user mode and the dealer mode.

Further, while the remote firmware update or the like is set under both the user mode and the dealer mode, for example, under the user mode, the initial approval request screen for individually approving the terms of use is displayed, whereas under the dealer mode, an alternative screen enabling collective approval of the terms of use can be displayed. Thus, the display on the dealer (service worker) side can be reduced as much as possible.

### 2.3 Effects, etc.

By displaying the second setting screen such as the alternative screen instead of the first setting screen such as the warning screen or the initial approval request screen for the service worker, displaying by the controller 100 for the service worker side can be reduced as much as possible. The setting screen related to the image quality adjustment also needs to be displayed in order through the procedure for the user worker so as not to make a mistake. Meanwhile, in the case of the service worker, since he or she is familiar with the operation, it is only necessary to display a problem such as an adjustment failure in detail at a minimum necessary timing (such as the start of scanning after printing), whereby improvement in efficiency of the installation operation can be expected.

The service worker does not feel troublesome in the displaying of the setting screen, and the work time for the initial installation can be shortened. Further, it is possible to set the item of the setting information such as the remote operation, which needs to be set only by the service worker, in the initial installation, for example.

### 3. Third Embodiment

Hereinafter, a third embodiment will be described. The third embodiment is an embodiment in which the initial installation can be executed under the dealer mode depending on a combination of states of the apparatuses in the image forming apparatus 10 or a change in the state of the apparatus.

In the third embodiment, descriptions of the hardware and software configurations that are the same as those in the first embodiment are omitted, and the differences from the first embodiment are mainly described.

### 3.1 Flow of Processing

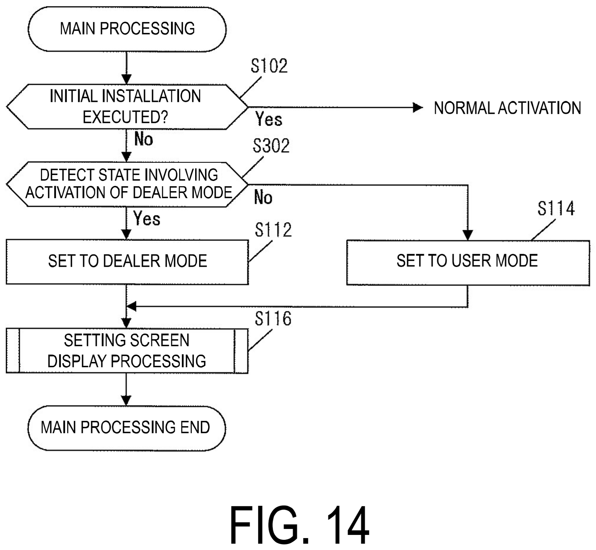

Hereinafter, a flow of processing in the present embodiment will be described. FIG. 14 is a diagram illustrating a flow of main processing. FIG. 14 is a replacement for FIG. 5 in the first embodiment, and S302 is executed between S102 and S112.

The controller 100 determines whether the state of the apparatus involving activation of the dealer mode is detected (S302). Here, the state of the apparatus involving activation of the dealer mode is a pattern combined in advance such as, for example, a pattern in which a tray 1 is pulled out and the front door is opened and closed three times, the state of the apparatus involving activation of the dealer mode may be detected when the pattern is detected. Note that the combination of the states of the apparatuses involving activation of the dealer mode and the change in the state of the apparatus may be determined in two or more stages to prevent erroneous activation.

### 3.2 Example of Operation

The operation of the image forming apparatus 10 according to the present embodiment will be described. When the service worker pulls out the tray 1 of the image forming apparatus 10 and opens and closes the front door three times, the controller 100 starts the initial installation under the dealer mode without displaying FIGS. 7A and 7B on the display 140.

Through combination of the states of the image forming apparatus 10 that can be handled and a change in the state of the apparatus in advance before the activation of the initial installation, it is possible to determine the difference in the change in the state of the apparatus at the time of the initial activation, and the processing can be differentiated between a case where the user worker performs the initial installation and the dealer (service worker) performs the initial installation. Accordingly, the service worker can activate the initial installation under the dealer mode by only operating the image forming apparatus 10 before activating the initial installation, and thus, it is not necessary to carry around the external storage apparatus 20.

### 4. Fourth Embodiment

Hereinafter, a fourth embodiment will be described. The fourth embodiment is an embodiment in which, when the initial installation is interrupted (for example, power OFF), the initial installation can be resumed from the point of the interruption if the mode is the dealer mode.

For the fourth embodiment, the same hardware and software configurations between the first embodiment and the fourth embodiment will not be described, and differences from the first embodiment will be focused on.

### 4.1 Flow of Processing

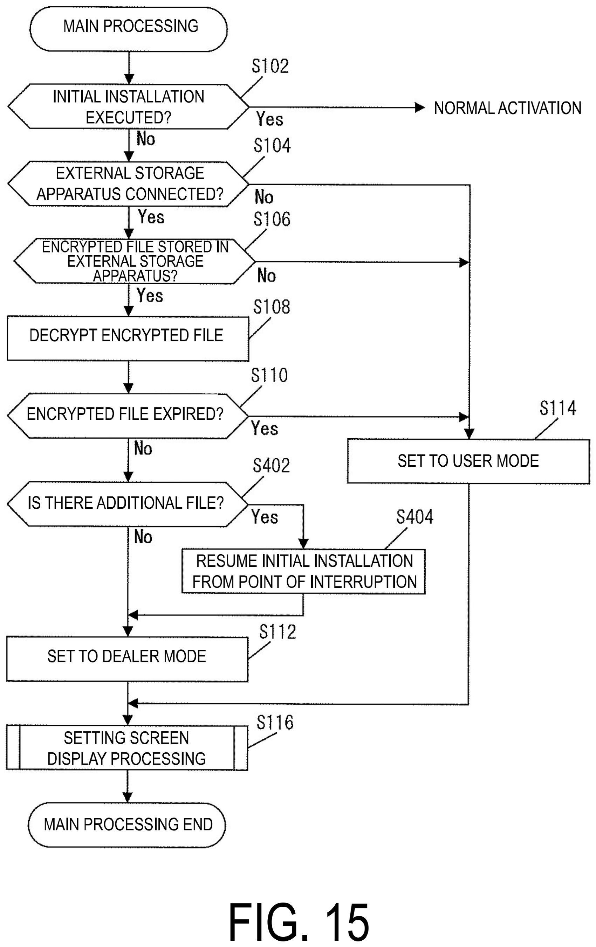

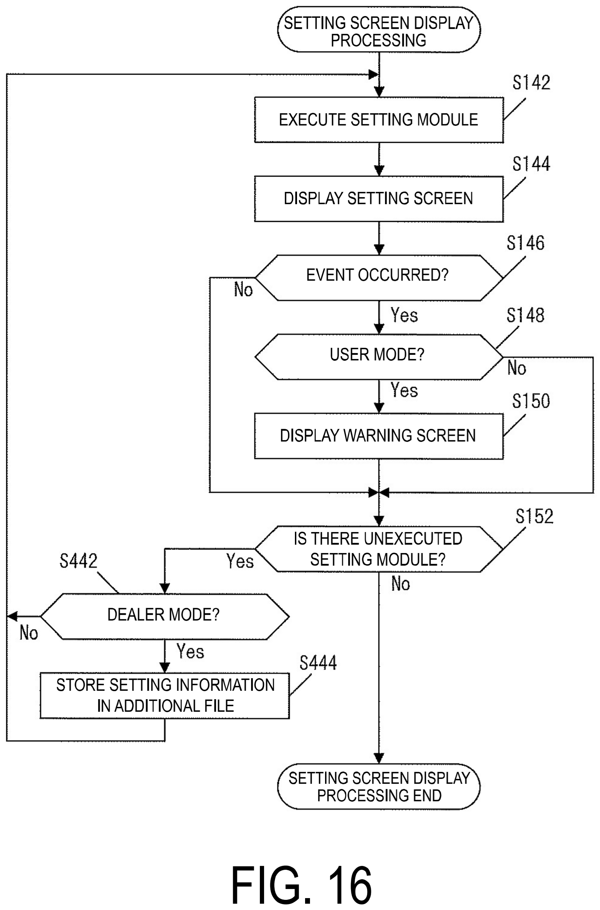

Below, the flow of processing in the present embodiment will be described with reference to FIGS. 15 and 16. FIG. 15 is a diagram illustrating a flow of main processing, and FIG. 16 is a diagram illustrating a flow of the setting screen display processing. FIG. 15 is a replacement for FIG. 5 in the first embodiment, and S402 and S404 are executed between S110 and S112. FIG. 16 is a replacement for FIG. 6 in the first embodiment, and S442 and S444 are executed after S152.

### 4.1.1 Flow of Main Processing

When the controller 100 determines that the expiration date of the encrypted specifying file 2110 has not passed, the controller 100 determines whether the additional file 2120 is stored in the external storage apparatus 20 (S110; No -> S402). When the controller 100 determines that the additional file 2120 is stored, the controller 100 reads the setting information from the additional file 2120 and resumes the initial installation from the point of the interruption (S402; Yes -> S404). Here, the controller 100 can read out, for example, information of the setting screen displayed on the display 140 before the interruption stored in the additional file 2120, and display the information on the display 140. On the other hand, when the controller 100 determines that the additional file 2120 is not stored, the controller 100 sets the initial installation to be executed under the dealer mode (S402; No -> S112)

### 4.1.2 Flow of Setting Screen Display Processing

Upon determining that there is a setting module that has not been executed, the controller 100 determines whether the initial installation is executed under the dealer mode (S152; No -> S442). Upon determining that the initial installation is executed under the dealer mode, the controller 100 stores the setting information set on the setting screen in the additional file 2120 (S442; Yes -> S444). Here, the controller 100 can store, for example, information of the setting screen displayed on the display 140 in the additional file 2120. On the other hand, when the controller 100 determines that the initial installation is not executed under the dealer mode, the controller 100 executes the next setting module (S442; No -> S142)

4.2 Operation Example

The operation of the image forming apparatus 10 according to the present embodiment will be described. The service worker connects the external storage apparatus 20 to the image forming apparatus 10 and starts the initial installation. Next, since there is a need to interrupt the initial installation, the service worker turns OFF the power to interrupt the work (power OFF). At this time, the display screen W240 in FIG. 10C is displayed on the display 140 as the remote firmware update setting screen.

Next, the service worker connects the external storage apparatus 20 to the image forming apparatus 10 and restarts the initial installation. The controller 100 displays the display screen W240 in FIG. 10C on the display 140, and resumes the initial installation under the dealer mode.

In this way, when the initial installation is interrupted, it is not necessary to start over from the beginning if the mode is the dealer mode. For example, even if the power OFF occurs while the work is under progress due to an unexpected situation, the impact on the service worker is reduced, and thus the work efficiency in the initial installation is improved.

The additional file 2120 is stored in the external storage apparatus 20 in the present embodiment, but may be stored in the storage 110, for example. The controller 100 may execute processing of reading the setting information from the additional file stored in the storage 110, not executing the setting module corresponding to the setting information, and not displaying the setting screen that has been set. For example, when the user worker performs the initial installation and then interrupts the initial installation before the service worker performs the initial installation, the controller 100 does not display the setting screen set by the user worker to the service worker who has resumed the initial installation, and thus the operation time of the initial installation by the service worker can be shortened. Conversely, in a case where the service worker performs part of the initial installation and then the user worker takes over and performs the remaining part of the initial installation, the controller 100 does not display the setting screen executed by the service worker to the user worker, and thus the initial installation is smoothly performed after the takeover by the user worker.

For example, regarding the restart in the case where the power OFF occurs while the work is under progress, it may be selectable to resume by recalling the setting information prior to the power OFF, restart from the beginning by discarding the setting information, and determine the user mode or the dealer mode again without displaying the content indicating the setting completion. For example, when the initial installation starts, the controller 100 displays a setting screen on which the resumption, the restart, and the redo of the insufficient part can be selected, and stores any one of the resumption, the restart, and the redo of the insufficient part selected by the service worker in the additional file 2120. The controller 100 reads the additional file 2120 and executes the processing of resuming the initial installation based on the selection of the service worker.

### 5. Modified Example

The disclosure is not limited to the above-described embodiments, and various modifications can be made.

In other words, embodiments obtained by combining technical mechanisms appropriately changed without departing from the gist of the disclosure are also included in the technical scope.

Although the above-described embodiments have been separately described for convenience of description, the embodiments can be combined and executed within an allowable range. The right of any of the technologies described herein is intended to be acquired through amendment, divisional application, or the like.

The programs running on each apparatus in the embodiments are programs for controlling a CPU or the like (programs for causing a computer to function) to implement the aforementioned functions in the embodiments. Information handled by these apparatuses is temporarily accumulated in a transitory storage apparatus (for example, a RAM) at the time of processing, is then stored in a storage apparatus such as any of various ROMs or an HDD, and is read, corrected, and written by the CPU as needed.

The recording medium storing the programs may be any of a semiconductor medium (for example, a ROM, a non-volatile memory card, or the like), an optical recording medium or a magneto-optical recording medium (for example, a Digital Versatile Disc (DVD), a Compact Disc (CD), a Blu-ray (trade name) Disc (BD) or the like), a magnetic recording medium (for example, a magnetic tape, a flexible disk, or the like), and the like.

In a case where the programs are distributed to market, the programs can be stored and distributed in a portable recording medium, or can be transferred to a server computer connected via a network such as the Internet. In this case, it is a matter of course that the storage apparatus of the server apparatus is also included in the disclosure.

Instead of being stored in the apparatus, the above-described data may be stored in an external apparatus and called as appropriate. For example, the data may be stored in a network-attached storage (NAS) or may be stored on the cloud.

It should be noted that the scope of the disclosure is not limited to the configurations explicitly described in the present specification, and a combination of technologies disclosed herein is also included in the scope thereof. Configurations of the disclosure sought to be patented are set forth in the appended claims, but configurations not recited in the claims are not intended to be excluded from the technical scope.

In the above-described specification, the descriptions "in a case in which ..." and "when ..." are described as examples, and the configuration is not limited to the described contents. Configurations not indicated by the descriptions "in a case in which ..." and "when ..." are also disclosed to the extent that the configurations are obvious to those skilled in the art, and the rights thereof are intended to be acquired.

The processing and the flow of data have been described herein in order, but the order thereof is not limited to the described order. For example, a configuration in which processing is partly removed or the order is rearranged is also disclosed, and the right thereof is intended to be acquired.

Although the functions described in the embodiments are described as being performed in the respective apparatuses, the functions may be implemented in one apparatus or by using an external server.

In addition, each functional block or various features of the apparatus used in the above-described embodiments may be implemented or executed by an electric circuit such as, for example, an integrated circuit or a plurality of integrated circuits. An electric circuit designed to perform the functions described in the present specification may include a general-purpose processor, a digital signal processor (DSP), an application-specific integrated circuit (ASIC), a field programmable gate array (FPGA) or other programmable logic apparatus, discrete gate or transistor logic, discrete hardware components, or a combination thereof. The general-purpose processor may be a microprocessor or may be a known processor, controller, microcontroller, or state machine. The electric circuit described above may be configured of a digital circuit or may be configured of an analog circuit. Further, when an integrated circuit technology for replacement into a current integrated circuit emerges with the development of semiconductor technology, a new integrated circuit based on the technology may also be used in one or more aspects of the disclosure.

### Reference Signs List

10 Image forming apparatus
20 External storage apparatus
100 Controller
110 Storage
120 ROM
130 RAM
140 Display
150 Operation inputter
160 Image former
165 Image scanner
170 Communicator
180 I/F unit

## Claims

1. An information processing apparatus (10) comprising:
a display (140);
a state detector that detects a state of the information processing apparatus (10);
an event determiner that determines occurrence of an event requiring displaying a warning screen; and
one or more controllers (100), wherein
the one or more controllers (100) display, on the display (140), a setting screen enabling displaying corresponding to the event, and
suppress the displaying of the warning screen on the display (140) based on the state of the information processing apparatus (10) detected by the state detector when the event determiner determines the occurrence of the event requiring the displaying of the warning screen.

2. The information processing apparatus (10) according to claim 1 further comprising a storage (110) that stores a first setting screen group and a second setting screen group as the setting screen, wherein
the one or more controllers (100) display the second setting screen group, with the displaying of the warning screen included in the first setting screen group suppressed, on the display (140) based on the state of the information processing apparatus (10) detected by the state detector.

3. The information processing apparatus (10) according to claim 2, wherein the one or more controllers (100) display, on the display (140), the second setting screen group with displaying of an initial approval request screen included in the first setting screen group suppressed.

4. The information processing apparatus (10) according to claim 2, wherein the one or more controllers (100) display the second setting screen group for displaying an alternative screen different from the first setting screen group on the display (140).

5. The information processing apparatus (10) according to claim 2, wherein the one or more controllers (100) display, on the display (140), the second setting screen group as a combination of one or a plurality of the setting screen with displaying of the warning screen suppressed, the setting screen with displaying of an initial approval request screen suppressed, and the setting screen for displaying an alternative screen different from first setting screen group, among setting screens in the first setting screen group.

6. The information processing apparatus (10) according to claim 1, wherein
the state detector detects connection of an external storage apparatus (20) storing a specifying file, and
the one or more controllers (100) suppress the displaying of the warning screen when the specifying file is stored in the external storage apparatus (20).

7. The information processing apparatus (10) according to claim 1, wherein
the state detector detects an open/closed state of a door provided to the information processing apparatus (10), a state of a sheet set, and a state of a switch, and
the one or more controllers (100) suppress the displaying of the warning screen when the state of the information processing apparatus (10) detected by the state detector is of a specific combination.

8. The information processing apparatus (10) according to claim 5, wherein when the setting screen of the second setting screen group is displayed on the display (140) when the setting for the information processing apparatus (10) is interrupted, the one or more controllers (100) store the setting screen displayed on the display (140) in the storage (110), and when the setting of the information processing apparatus (10) resumes, the one or more controllers (100) display the setting screen stored in the storage (110) on the display (140) and resumes the setting.

9. The information processing apparatus (10) according to claim 5, wherein the one or more controllers (100) store, in the storage (110), processing executed for the setting for the information processing apparatus (10) when the setting for the information processing apparatus (10) is interrupted, and when the setting for the information processing apparatus (10) resumes, the one or more controllers (100) display, in an omitted manner, the setting screen related to the processing stored in the storage (110).

10. A display method comprising:
a display step;
a state detection step of detecting a state of the information processing apparatus (10);
an event determination step of determining occurrence of an event requiring displaying of a warning screen; and
a control step of
displaying a setting screen enabling displaying corresponding to the event, and
suppressing the displaying of the warning screen based on the state of the information processing apparatus (10) detected in the state detection step when the occurrence of the event requiring the displaying of the warning screen is determined in the event determination step.
